(19) **Europäisches Patentamt European Patent Office Office européen des brevets**

(11) **EP 4 143 044 B1**

(12) **EUROPEAN PATENT SPECIFICATION**

(45) Date of publication and mention
of the grant of the patent:
**03.12.2025 Bulletin 2025/49**

(21) Application number: **21722418.7**

(22) Date of filing: **27.04.2021**

(51) International Patent Classification (IPC):
**B60K 1/00** *(2006.01)* **B60K 17/356** *(2006.01)*
**B60W 30/18** *(2012.01)* **B60K 23/08** *(2006.01)*

(52) Cooperative Patent Classification (CPC):
**B60K 1/00; B60K 17/356; B60K 23/0808;
B60L 15/2045; B60L 50/51; B60W 30/02;
B60W 30/18027;** B60K 2001/001; B60L 2220/42;
B60L 2240/12; B60L 2240/423; B60L 2240/642;
B60L 2260/28; B60W 2520/10; B60W 2520/26;

(Cont.)

(86) International application number:
**PCT/EP2021/060923**

(87) International publication number:
**WO 2021/219597 (04.11.2021 Gazette 2021/44)**

(54) **TORQUE REDISTRIBUTION AND ADJUSTMENT METHOD, AND CORRESPONDING CONTROL UNIT AND ELECTRIC VEHICLE**

DREHMOMENTVERTEILUNGS- UND -ANPASSUNGSVERFAHREN UND ZUGEHÖRIGE STEUERUNGSEINHEIT UND ELEKTROFAHRZEUG

PROCÉDÉ DE REDISTRIBUTION ET DE RÉGLAGE DE COUPLE, ET UNITÉ DE COMMANDE ET VÉHICULE ÉLECTRIQUE CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2020 CN 202010353873**

(43) Date of publication of application:
**08.03.2023 Bulletin 2023/10**

(73) Proprietor: **Robert Bosch GmbH
70442 Stuttgart (DE)**

(72) Inventors:
• **LI, Gang
  Wuxi, Jiangsu 214028 (CN)**
• **XIN, Yibo
  Wuxi, Jiangsu 214028 (CN)**

(56) References cited:
**EP-A1- 3 514 003          CN-A- 107 953 801
DE-A1- 102016 102 004   US-A1- 2007 129 871
US-A1- 2011 257 826      US-A1- 2019 291 593**

(52) Cooperative Patent Classification (CPC): (Cont.)
B60W 2552/15; B60W 2720/403; Y02T 10/64;
Y02T 10/70; Y02T 10/72; Y02T 90/16

## Description

## Technical Field

The present invention relates to a method for redistributing and adjusting torque of an electric vehicle, a corresponding control unit for an electric vehicle, a corresponding computer-readable program medium and a corresponding electric vehicle.

## Background Art

An electric vehicle is a vehicle that is powered at least partially by an electric power supply on board and can at least partially rely on an electric machine to drive its wheels. At present, electric vehicles can be divided mainly into three categories, i.e. battery electric vehicles, hybrid electric vehicles, and fuel cell vehicles.

Typically, the front and rear axles of an electric vehicle are equipped with respective driving motors to drive the rotation of wheels of the front and rear axles. During normal driving, a vehicle control unit calculates a total torque required by the vehicle according to some parameters and a depression degree of an accelerator pedal, and then distributes the total torque to the driving motors of the front and rear axles, respectively, at a ratio of 1 : 1, in order to drive the vehicle smoothly.

However, electric vehicles, especially electric trucks, often face some unusual driving conditions, which may put them in a situation where they need to get out of trouble. For example, if the total torque is still distributed to the driving motors of the front and rear axles at the ratio of 1 : 1 when a truck climbs a hill, in extreme cases, although the calculated total torque meets the requirements, it makes the truck unable to complete the climb or makes it very difficult to climb the hill. There are other similar situations, such as a front wheel or a rear wheel getting stuck in a mud pit.

Therefore, improvements need to be made to electric vehicles to further improve the adaptability of the electric vehicles to various driving conditions.

Patent Literature DE 10 2016 102004 A1 provides methods and systems for controlling torques for a front axle and a rear axle of a vehicle having independent front and rear drive systems.

## Summary of the Invention

It is an object of the present invention to provide an improved method for redistributing and adjusting torque of an electric vehicle, an improved control unit for an electric vehicle, an improved computer-readable program medium and an improved electric vehicle.

According to a first aspect of the present invention, there is provided a method for redistributing and adjusting torque of an electric vehicle, as defined by independent claim 1, wherein the electric vehicle at least comprises a first electric drive for a front axle and a second electric drive for a rear axle, the method comprising at least the steps of: determining whether the electric vehicle is in a driving state requiring redistribution of torque; and adjusting the torque initially distributed to the front axle and/or the rear axle or the torque initially distributed to the respective wheels by controlling the first electric drive and/or the second electric drive if it is determined that the electric vehicle is in the driving state requiring redistribution of torque. The driving state requiring redistribution of torque includes a climbing state. The electric vehicle is in the climbing state is determined based on a slope of a hill.

According to a second aspect of the present invention, there is provided a control unit for an electric vehicle, which control unit is configured to perform the above method.

According to a third aspect of the present invention, there is provided a computer-readable program medium storing program instructions, which are executable by a processor to perform the above method.

According to a fourth aspect of the present invention, there is provided an electric vehicle comprising the control unit described above and/or the computer-readable program medium described above.

According to the electric vehicle provided by the present invention, better torque distribution can be made for specific driving states.

## Brief Description of the Drawings

In the following, the principles, features and advantages of the present invention can be better understood by describing the present invention in more detail with reference to the accompanying drawings. In the drawings:

Fig. 1 schematically shows a basic schematic diagram of an electric vehicle according to an exemplary embodiment of the present invention;

Fig. 2 shows a flowchart of a method for adjusting torque distribution of an electric vehicle for a climbing state according to an exemplary embodiment of the present invention; and

Fig. 3 shows a flowchart of a method for adjusting torque distribution of an electric vehicle based on the slope of a hill according to a further exemplary embodiment of the present invention.

## Detailed Description of Embodiments

In order to clarify the technical problems to be solved by the present invention, the technical solutions and the beneficial technical effects, the present invention will be described in further detail below with reference to the drawings and various exemplary embodiments. It should be understood that the specific embodiments described herein are only for the purpose of explaining the present invention and are not intended to limit the scope of protection of the present invention.

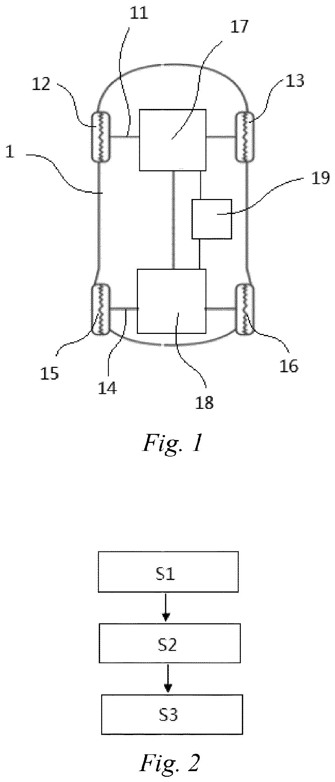

Fig. 1 schematically shows a basic schematic diagram of an electric vehicle according to an exemplary embodiment of the present invention.

As shown in Fig. 1, the exemplary electric vehicle 1 includes: a first front wheel 12 and a second front wheel 13 on a front axle 11; a first rear wheel 15 and a second rear wheel 16 on a rear axle 14; a first electric drive 17, such as a motor, for the front axle 11 for driving the first front wheel 12 and the second front wheel 13; a second electric drive 18, such as a motor, for the rear axle 14 for driving the first rear wheel 15 and the second rear wheel 16; and a control unit 19 for controlling the first electric drive 17 and the second electric drive 18. Here, the control unit 19 may be a vehicle control unit (VCU) of the electric vehicle.

According to the present invention, the control unit 19 is configured to be able to adjust the torque distribution of the electric vehicle 1 in real time, for example, by controlling the first electric drive 17 and/or the second electric drive 18 according to the driving state of the electric vehicle 1, for example, adjusting the distribution of the actual total torque output between the front axle 11 and the rear axle 14.

Hereinafter, this will be described in more detail with reference to more specific exemplary embodiments.

For example, when the electric vehicle 1 is in a climbing driving state, more torque can be distributed to the rear axle 14 than to the front axle 11, which makes it easier for the electric vehicle 1 to climb a hill, especially for an electric truck.

To this end, according to an exemplary embodiment of the present invention, as shown in Fig. 2, the following operation steps may be performed: S1) acquiring a slope of a hill; S2) determining whether to trigger a climbing mode; and S3) if the climbing mode is triggered, increasing the torque distributed to the rear axle 14 of the electric vehicle 1, which can be implemented by controlling the first electric drive 17 and/or the second electric drive 18 via the control unit 15, for example. Preferably, the total torque is fixed while the torque distribution is adjusted, so in this case, when the torque distributed to the rear axle 14 increases, the torque distributed to the front axle 11 decreases accordingly. Of course, those skilled in the art can understand that even the total torque can be changed in some cases, and the present invention does not impose restrictions on this.

The slope of a hill can be obtained in various approaches, which is not limited by the present invention, no matter which approach is used, it is feasible as long as the slope of the hill can be obtained reliably. For example, according to an exemplary embodiment of the present invention, if an electric vehicle is equipped with a slope sensor, the slope can be directly measured by using the slope sensor.

It can be understood by those skilled in the art that, under the condition that other possible influencing parameters are unchanged, the acceleration of a vehicle during driving is related to the actual total torque output; however, when the vehicle is driving on a hill, the vehicle will also be affected by a force downward along the hill due to the effect of the hill, so the acceleration will also be related to the slope of the hill. Therefore, according to another exemplary embodiment of the present invention, the slope of the hill can be calculated based on the actual total torque output and the acceleration of the vehicle.

Those skilled in the art can also understand that the acceleration of the vehicle can be obtained by many different methods. For example, the acceleration of the vehicle can be directly measured by an acceleration sensor or indirectly obtained by calculation based on some parameters. The present invention does not impose restrictions on this.

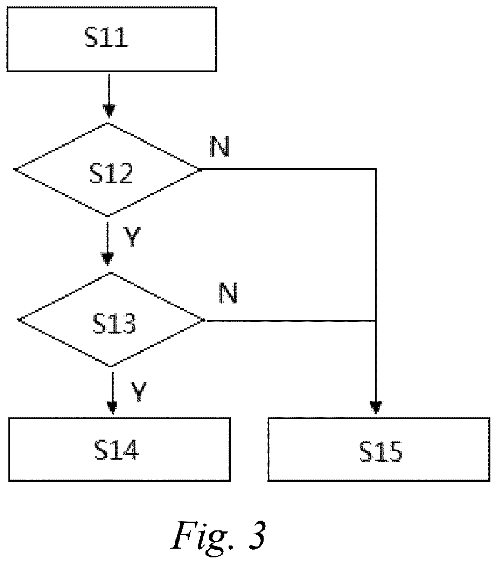

Fig. 3 shows a flowchart of a method for adjusting torque distribution of the electric vehicle 1 based on the slope of a hill according to a further exemplary embodiment of the present invention.

As shown in Fig. 3, at step S11, the slope $s$ of the hill which the electric vehicle 1 is climbing is acquired. At step S12, the slope $s$ of the hill is compared with a predetermined limit threshold $s1$ to determine whether the slope $s$ is reasonable, for example, whether the slope $s$ is less than or equal to the predetermined limit threshold $s1$=10%. If it exceeds the predetermined limit threshold $s1$, it can be considered that the slope $s$ is unreasonable, and the method can proceed to step S15 in which the current torque distribution mode is maintained unchanged or return to step S11 in which a new slope $s$ is acquired again. If the slope $s$ is less than or equal to the predetermined limit threshold $s1$, the slope $s$ is considered reasonable, and therefore, the method can proceed to step S13. At step S13, it is determined whether an additional predetermined condition for necessary torque redistribution and adjustment is met. If the additional predetermined condition is met, the method proceeds to step S14. At step S14, the torque distributed to the rear axle 14 is increased. For example, the torque distributed to the rear axle 14 may be adjusted based on the magnitude of the slope $s$. If the additional predetermined condition is not met, the method can also proceed to step S15 in which the current torque distribution mode is maintained unchanged.

According to an exemplary embodiment of the present invention, in step S11, the obtained slope $s$ is subjected to filtering processing, such as low-pass filtering processing, so as to obtain a more reliable value of the slope $s$, thereby reducing incorrect determination.

As described above, the slope $s$ of the hill can be calculated based on the actual total torque output $T$ and the acceleration $a$ of the vehicle. In this case, the relationship between the slope $s$ of the hill, the actual total torque output $T$ and the acceleration $a$ of the vehicle can be expressed in the following function expression (1):

$$S = f\,(T, a) \tag{1}$$

According to an exemplary embodiment of the present invention, the slope *s* of the hill can be directly determined from the actual total torque output *T* and the acceleration a of the vehicle by means of a look-up table, which can simplify the calculation process and save on valuable calculation resources. The look-up table may be pre-stored in a corresponding memory, for example, in the control unit 15.

Those skilled in the art can understand that the look-up table may vary as some influencing parameters change, for example, the vehicle weight and/or parameters of the transmission system will both affect the determination of the slope *s*. Therefore, according to an exemplary embodiment of the present invention, a step of updating the function expression (1) or the look-up table according to influencing parameters for slope calculation may be performed additionally before step S11. For example, the current influencing parameters for slope calculation of the vehicle can be obtained and the function expression (1) or the look-up table can be updated in real time to ensure that the calculation of the slope *s* is more accurate.

According to an exemplary embodiment of the present invention, the additional predetermined condition may include a predetermined vehicle speed threshold and/or a predetermined minimum slope threshold.

For example, only when the speed of the vehicle is less than the predetermined vehicle speed threshold, such as 80 km/h, the method will continue with subsequent torque redistribution operation. It can be understood that if the speed of the vehicle is greater than the predetermined vehicle speed threshold, on the one hand, it means that the slope *s* of the hill is usually small, and it may not be necessary to adjust the current torque distribution mode; on the other hand, if the torque distribution is adjusted in this case, the driving of the vehicle may become unsafe.

If the slope *s* of the hill is less than or equal to the predetermined minimum slope threshold, it also means that the slope is small and it is not necessary to adjust the current torque distribution mode.

According to an exemplary embodiment of the present invention, the torque increase $\Delta T$ of the rear axle 14 of the electric vehicle 1 is determined based on the slope *s*, which, for example, can be expressed by the following function expression (2):

$$\Delta T = f(s) \tag{2}$$

According to an exemplary embodiment of the present invention, the torque increase $\Delta T$ may be a percentage relative to the total torque *T,* or may be an exact value by which the torque increases.

According to an exemplary embodiment of the present invention, the torque increase $\Delta T$ can be expressed by the following function expression (3):

$$\Delta T = k1 \cdot s \cdot T \tag{3}$$

where *k1* represents a predetermined coefficient.

Therefore, the redistributed torque *T1* of the rear axle 14 of the electric vehicle 1 can be expressed by the following function expression (4):

$$T1 = T0 + \Delta T \tag{4}$$

where *T0* is the torque initially distributed to the rear axle 14.

The torque *T0* initially distributed to the rear axle 14 can be expressed as a percentage of the total torque *T*, for example, by the following function expression (5):

$$T0 = k2 \cdot T \tag{5}$$

where *k2* is a predetermined coefficient, for example, *k2* = 0.5.

Next, another application scenario will be described in order to better understand the technical concept of the present invention.

For example, when a wheel of a vehicle is stuck in a mud pit, the wheel cannot help the vehicle get out of the pit because it slips, so increasing the torque of another axle can better help the vehicle to get out of the pit.

For this application scenario, according to an exemplary embodiment of the present invention, the following steps may be included: detecting the slip state of a wheel, and if the wheel is in a slip state, increasing the torque distributed to the other axle, otherwise, maintaining the current torque distribution mode unchanged.

According to an exemplary embodiment of the present invention, whether a wheel is in a slip state may be determined based on the difference between the speed of the rear axle 14 and the speed of the front axle 11. For example, if a wheel of the rear axle 14 slips, the speed of the rear axle 14 will increase as the resistance becomes smaller, so the difference between the speeds of the front and rear axles will correspondingly increase, and thus it can be determined that the wheel of the rear axle 14 slips, and vice versa.

The speed difference between the front and rear axles can be expressed by the following function expression (6):

$$\Delta r = r1 - r2 \tag{6}$$

where $\Delta r$ represents the speed difference between the front and rear axles, *r1* represents the speed of the rear axle 14, and *r2* represents the speed of the front axle 11.

In order to more reliably determine whether a wheel is in a slip state, the absolute value of the speed difference $\Delta r$ between the front and rear axles can be compared with a predetermined speed difference threshold *r0*. If $\Delta r$ is greater than or equal to *r0,* the wheel is considered to be in a slip state; and if $\Delta r$ is less than *r0,* the wheel is not considered to be in a slip state or a torque distribution adjustment is unnecessary.

Those skilled in the art can understand that the signal processing method described above in combination with the climbing scenario can also be used to process the speed difference $\Delta r$ between the front and rear axles, so as to improve the reliability and accuracy of the determination.

According to an exemplary embodiment of the present invention, the torque increase amount of the other axle can be determined based on the speed difference $\Delta r$ between the front and rear axles. For those skilled in the art, it can be easily understood based on the foregoing description and will not be repeated here.

The above describes the technical concept of the present invention with two specific application scenarios, but for those skilled in the art, it is obvious that the present invention is not limited to the above application scenarios. On the contrary, the concept of the present invention can be used in any driving state requiring readjustment of torque distribution. This kind of driving state can be called a driving state requiring redistribution of torque. For example, when the vehicle climbs a hill while backing up, it may also be necessary to redistribute the torque, for example, by increasing the torque of the front axle.

In addition, although the concept of the present invention has been described in the above embodiments in which the front and rear axles are each provided with an electric drive, the present invention is not limited thereto. For example, if each wheel is equipped with a corresponding electric drive, it is even possible to readjust the distribution of total torque between the individual wheels by controlling the electric drive of the corresponding wheel based on the concept of the present invention. For example, when a certain wheel slips because it is stuck in a mud pit, it is even possible to only reduce the torque distributed to the slipping wheel.

For those skilled in the art, it can be understood that when it is detected that the electric vehicle is in a driving state requiring redistribution of torque, in addition to adjusting the torque distribution, even the total torque can be adjusted, for example, by increasing the total torque appropriately.

In addition, those skilled in the art can understand that the technical concept of the present invention is applicable to all types of electric vehicles, including hybrid electric vehicles.

**List of Reference Numerals**

1    Electric vehicle
11   Front axle
12   First front wheel
13   Second front wheel
14   Rear axle
15   First rear wheel
16   Second rear wheel
17   First electric drive
18   Second electric drive
19   Control unit

**Claims**

1. A method for redistributing and adjusting torque of an electric vehicle (1), wherein the electric vehicle (1) at least comprises a first electric drive (17) for a front axle (11) and a second electric drive (18) for a rear axle (14), the method comprising at least the steps of:

   determining whether the electric vehicle (1) is in a driving state requiring redistribution of torque; and
   adjusting the torque initially distributed to the front axle (11) and/or the rear axle (14) or the torque initially distributed to the respective wheels by controlling the first electric drive (17) and/or the second electric drive (18) if it is determined that the electric vehicle (1) is in the driving state requiring redistribution of torque, wherein the driving state requiring redistribution of torque includes a climbing state, whether the electric vehicle (1) is in the climbing state is determined based on a slope of a hill.

2. The method as claimed in claim 1, wherein the driving state requiring redistribution of torque further includes a wheel-slip state.

3. The method as claimed in claim 2, wherein whether the electric vehicle (1) is in the wheel-slip state is determined based on a speed of the front axle (11) and a speed of the rear axle (14).

4. The method as claimed in claim 3, wherein it is determined whether the electric vehicle (1) meets an additional predetermined condition for necessary torque redistribution and adjustment, and the torque is redistributed and adjusted only when the additional predetermined condition is met.

5. The method as claimed in claim 4, wherein

   for the climbing state, the additional predetermined condition includes: the speed of the electric vehicle (1) being less than a predetermined vehicle speed threshold and/or the slope of the hill being greater than a predetermined minimum slope threshold; and/or
   for the wheel-slip state, the additional predetermined condition includes: the absolute value of a difference between the speed of the front axle (11) and the speed of the rear axle (14) being greater than a predetermined speed difference threshold.

6. The method as claimed in any of claims 3-5, wherein

for the climbing state, the torque is redistributed and adjusted based on the slope of the hill; and/or
for the wheel-slip state, the torque is redistributed and adjusted based on the difference between the speed of the front axle (11) and the speed of the rear axle (14).

7. The method as claimed in any of claims 3-6, wherein

for a forward climbing state, the torque distributed to the rear axle (14) is increased based on the slope of the hill with the total torque unchanged; and/or
the slope of the hill is determined based on an actual total torque output and an acceleration of the vehicle by means of a look-up table; and/or
the slope of the hill is processed with low-pass filtering; and/or
if the slope of the hill is greater than a predetermined limit threshold, the current torque distribution mode is maintained.

8. The method as claimed in claim 7, wherein
the look-up table is updated in real time based on parameters that affect the look-up table.

9. A control unit (19) for an electric vehicle (1), the control unit (19) being configured to perform the method of any of claims 1-8.

10. An electric vehicle (1), the electric vehicle (1) comprising the control unit (19) as claimed in claim 9.

**Patentansprüche**

1. Verfahren zum Umverteilen und Anpassen eines Drehmoments eines Elektrofahrzeugs (1), wobei das Elektrofahrzeug (1) mindestens einen ersten elektrischen Antrieb (17) für eine Vorderachse (11) und einen zweiten elektrischen Antrieb (18) für eine Hinterachse (14) umfasst, wobei das Verfahren mindestens die folgenden Schritte umfasst:

Bestimmen, ob sich das Elektrofahrzeug (1) in einem Fahrzustand befindet, der eine Umverteilung von Drehmoment erfordert; und
Anpassen des anfänglich auf die Vorderachse (11) und/oder die Hinterachse (14) verteilten Drehmoments oder des anfänglich auf die jeweiligen Räder verteilten Drehmoments durch Steuern des ersten elektrischen Antriebs (17) und/oder des zweiten elektrischen Antriebs (18), falls bestimmt wird, dass sich das Elektrofahrzeug (1) in dem Fahrzustand befindet, der eine Umverteilung von Drehmoment erfordert, wobei der Fahrzustand, der eine Umverteilung von Drehmoment erfordert, einen Kletterzustand beinhaltet,
wobei, ob sich das Elektrofahrzeug (1) im Kletterzustand befindet, basierend auf einer Steigung eines Hügels bestimmt wird.

2. Verfahren nach Anspruch 1, wobei
der Fahrzustand, der eine Umverteilung von Drehmoment erfordert, ferner einen Radschlupfzustand umfasst.

3. Verfahren nach Anspruch 2, wobei
ob sich das Elektrofahrzeug (1) im Radschlupfzustand befindet, basierend auf einer Drehzahl der Vorderachse (11) und einer Drehzahl der Hinterachse (14) bestimmt wird.

4. Verfahren nach Anspruch 3, wobei
bestimmt wird, ob das Elektrofahrzeug (1) eine zusätzliche vorbestimmte Bedingung für die notwendige Drehmomentumverteilung und -anpassung erfüllt, und das Drehmoment erst dann umverteilt und angepasst wird, wenn die zusätzliche vorbestimmte Bedingung erfüllt ist.

5. Verfahren nach Anspruch 4, wobei

für den Kletterzustand, die zusätzliche vorbestimmte Bedingung Folgendes umfasst: die Geschwindigkeit des Elektrofahrzeugs (1) ist kleiner als eine vorbestimmte Fahrzeuggeschwindigkeitsschwelle und/oder die Steigung des Hügels ist größer als eine vorbestimmte minimale Steigungsschwelle; und/oder
für den Radschlupfzustand, die zusätzliche vorbestimmte Bedingung Folgendes umfasst: der Betrag einer Differenz zwischen der Drehzahl der Vorderachse (11) und der Drehzahl der Hinterachse (14) ist größer als eine vorbestimmte Drehzahldifferenzschwelle.

6. Verfahren nach einem der Ansprüche 3-5, wobei

für den Kletterzustand, das Drehmoment basierend auf der Steigung des Hügels umverteilt und angepasst wird; und/oder
für den Radschlupfzustand, das Drehmoment basierend auf der Differenz zwischen der Drehzahl der Vorderachse (11) und der Drehzahl der Hinterachse (14) umverteilt und angepasst wird.

7. Verfahren nach einem der Ansprüche 3-6, wobei

für einen Vorwärtskletterzustand, das auf die Hinterachse (14) verteilte Drehmoment basierend auf der Steigung des Hügels bei unverändertem Gesamtdrehmoment erhöht wird; und/oder

die Steigung des Hügels anhand einer tatsächlichen Gesamtdrehmomentabgabe und einer Beschleunigung des Fahrzeugs mittels einer Nachschlagetabelle bestimmt wird; und/oder die Steigung des Hügels mit Tiefpassfilterung verarbeitet wird; und/oder wenn die Steigung des Hügels größer als eine vorgegebene Grenzschwelle ist, der aktuelle Drehmomentverteilungsmodus erhalten bleibt.

8. Verfahren nach Anspruch 7, wobei die Nachschlagetabelle basierend auf Parametern, die sich auf die Nachschlagetabelle auswirken, in Echtzeit aktualisiert wird.

9. Steuereinheit (19) für ein Elektrofahrzeug (1), wobei die Steuereinheit (19) dazu ausgelegt ist, das Verfahren nach einem der Ansprüche 1-8 durchzuführen.

10. Elektrofahrzeug (1), wobei das Elektrofahrzeug (1) die Steuereinheit (19) nach Anspruch 9 umfasst.

**Revendications**

1. Procédé de redistribution et de réglage de couple d'un véhicule électrique (1), dans lequel le véhicule électrique (1) comprend au moins un premier mécanisme d'entraînement électrique (17) pour un essieu avant (11) et un second mécanisme d'entraînement électrique (18) pour un essieu arrière (14), le procédé comprenant au moins les étapes suivantes :

le fait de déterminer si le véhicule électrique (1) est dans un état de conduite nécessitant une redistribution du couple ; et le réglage du couple initialement distribué à l'essieu avant (11) et/ou l'essieu arrière (14) ou du couple initialement distribué aux roues respectives en commandant le premier mécanisme d'entraînement électrique (17) et/ou le second mécanisme d'entraînement électrique (18) s'il est déterminé que le véhicule électrique (1) se trouve dans l'état de conduite nécessitant une redistribution de couple, dans lequel l'état de conduite nécessitant une redistribution du couple inclut un état de montée, le fait de savoir si le véhicule électrique (1) est dans l'état de montée est déterminé sur la base d'une pente d'une colline.

2. Procédé selon la revendication 1, dans lequel

l'état de conduite nécessitant une redistribution du couple inclut en outre un état de patinage des roues.

3. Procédé selon la revendication 2, dans lequel le fait de savoir si le véhicule électrique (1) est dans l'état de patinage des roues est déterminé sur la base d'une vitesse de l'essieu avant (11) et d'une vitesse de l'essieu arrière (14).

4. Procédé selon la revendication 3, dans lequel il est déterminé si le véhicule électrique (1) satisfait à une condition prédéterminée supplémentaire pour une redistribution et un réglage de couple nécessaires, et le couple est redistribué et réglé uniquement lorsque la condition prédéterminée supplémentaire est satisfaite.

5. Procédé selon la revendication 4, dans lequel

pour l'état de montée, la condition prédéterminée supplémentaire inclut : la vitesse du véhicule électrique (1) étant inférieure à un seuil de vitesse de véhicule prédéterminé et/ou la pente de la colline étant supérieure à un seuil de pente minimal prédéterminé ; et/ou

pour l'état de patinage des roues, la condition prédéterminée supplémentaire inclut : la valeur absolue d'une différence entre la vitesse de l'essieu avant (11) et la vitesse de l'essieu arrière (14) étant supérieure à un seuil de différence de vitesse prédéterminé.

6. Procédé selon l'une quelconque des revendications 3 à 5, dans lequel

pour l'état de montée, le couple est redistribué et réglé sur la base de la pente de la colline ; et/ou pour l'état de patinage des roues, le couple est redistribué et réglé sur la base de la différence entre la vitesse de l'essieu avant (11) et la vitesse de l'essieu arrière (14).

7. Procédé selon l'une quelconque des revendications 3 à 6, dans lequel

pour un état de montée vers l'avant, le couple distribué à l'essieu arrière (14) est augmenté sur la base de la pente de la colline avec le couple total inchangé ; et/ou la pente de la colline est déterminée sur la base d'une sortie de couple totale réelle et d'une accélération du véhicule au moyen d'une table de consultation ; et/ou la pente de la colline est traitée avec un filtrage passe-bas ; et/ou si la pente de la colline est supérieure à un seuil limite prédéterminé, le mode de distribution de couple actuel est maintenu.

**8.** Procédé selon la revendication 7, dans lequel la table de consultation est mise à jour en temps réel sur la base de paramètres qui affectent la table de consultation.

**9.** Unité de commande (19) pour un véhicule électrique (1), l'unité de commande (19) étant configurée pour mettre en œuvre le procédé selon l'une quelconque des revendications 1 à 8.

**10.** Véhicule électrique (1), le véhicule électrique (1) comprenant l'unité de commande (19) selon la revendication 9.

*Fig. 1*

*Fig. 2*

*Fig. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016102004 A1